# EUROPEAN PATENT SPECIFICATION

(11) **EP 1 093 294 B1**
(45) Date of publication and mention of the grant of the patent: **17.01.2007**
(21) Application number: 00308950.5
(22) Date of filing: 11.10.2000
(51) Int. Cl.: H04N 1/393, H04N 1/00

(54) **Image processing apparatus and method therefor**
Bildbearbeitungsgerät und Verfahren dazu
Appareil de traitement d'image et procédé correspondant

(30) Priority: 12.10.1999 JP 28937599
(43) Date of publication of application: 18.04.2001
(73) Proprietor: CANON KABUSHIKI KAISHA, Tokyo (JP)
(72) Inventor: Takenaka, Shumpei, Canon Kabushiki Kaisha, Tokyo (JP); Suwa, Yukinobu, Canon Kabushiki Kaisha, Tokyo (JP)
(74) Representative: Beresford, Keith Denis Lewis

(56) References cited:
- EP-A- 0 784 294
- EP-A- 0 920 186
- WO-A-97/50243
- PATENT ABSTRACTS OF JAPAN vol. 1998, no. 08, 30 June 1998 (1998-06-30) & JP 10 065947 A (FUJI PHOTO FILM CO LTD), 6 March 1998 (1998-03-06)
- PATENT ABSTRACTS OF JAPAN vol. 1996, no. 09, 30 September 1996 (1996-09-30) & JP 08 139909 A (CANON INC), 31 May 1996 (1996-05-31)

## Description

### BACKGROUND OF THE INVENTION

### Field of the Invention

The present invention relates to an image processing apparatus for efficiently arranging and printing, on a designated sheet, all the image data or selected ones thereof, obtained by a device such as a digital camera or the like and stored in a memory medium, and an image processing method and a memory medium adapted for use therefor.

### Related Background Art

In case of printing plural images on a printing sheet by designating division therein in a conventional printing apparatus, the number of printed images, the printing positions and the printing areas are defined as invariable values, so that the sheet and the images to be printed are designated in the unit of each sheet.

Also in such conventional printing apparatus, in case of printing plural desired images on a printing sheet, the images are printed as a size according to the sheet size, so that the magnification of the images varies according to the sheet size and it is not possible to print the desired image with the desired size on the sheet.

WO 97/50243 discloses a printing apparatus and printing system for printing images from a digital camera. The number of images to be printed on a sheet can be selected and the size of the images is automatically adjusted according to the desired format.

EP-A-0 920 186 discloses a voice code image processing/editing apparatus for printing images, which includes means for designating the size of images to be printed, means for designating the size of a sheet on which the image is printed, and other aspects of image layout. The apparatus has a controller that changes the size of the image in accordance with the set image/code layout parameters.

In accordance with one aspect of the invention, there is provided a print control apparatus for printing a plurality of images, comprising:
print size designation means for designating a print size for each of the plurality of images to be printed;
sheet size designation means for designating a sheet size on which an image to be printed is printed; and
control means for controlling execution of a print by reducing the print size designated by said print size designation means, in the case that no image can be printed on a page for the sheet size designated by said sheet size designation means if the print size designated by said print size designation means is maintained;
characterised in that the print control apparatus includes print image number designation means for designating a number of images to be printed on a page; and
the control means is operative to reduce the number of images that are allowed in one page with the print size designated by said print size designation means in the case that at least one image but fewer images than designated by said print image number designation means can be printed on one page.

In accordance with another aspect of the invention, there is provided a print control method for printing a plurality of images, comprising:
a print size designation step of designating a print size for each of the plurality of images to be printed;
a sheet size designation step of designating a sheet size on which an image to be printed is printed; and
a control step of controlling execution of a print by reducing the print size designated in said print size designation step, in the case that no image can be printed on a page for the sheet designated in said sheet size designation step if the print size designated in said print size designation step is maintained;
characterised in that it includes a print image number designation step of designating a number of images to be printed on a page; and
the control step reduces the number of images that are allowed in one page with the print size designated in said print size designation step in the case that at least one image but fewer images than designated in said print image number designation step can be printed on one page.

In accordance with yet another aspect of the invention, there is provided a computer-readable medium storing a computer-executable program for a print control method for printing a plurality of images, said program having processor implementable instructions for executing:
a print size designation step of designating a print size for each of the plurality of images to be printed;
a sheet size designation step of designating a sheet size on which an image to be printed is printed; and
a control step of controlling execution of a print by reducing the print size designated in said print size designation step, in the case that no image can be printed on a page for the sheet designated in said sheet size designation step if the print size designated in said print size designation step is maintained;
characterised in that it includes a print image number designation step of designating a number of images to be printed on a page; and
the control step reduces the number of images that are allowed in one page with the print size designated in said print size designation step in the case that at least one image but fewer images than designated in said print image number designation step can be printed on one page.

### BRIEF DESCRIPTION OF THE DRAWINGS

Fig. 1 is a block diagram of a control apparatus for an electronic image;
Fig. 2 is a flow chart showing an example of printing control;
Fig. 3 is a flow chart showing an example of printing control with priority on the number of images;
Fig. 4 is a flow chart showing printing control in case the image size and the number of images are both designated;
Fig. 5 is a flow chart for a condition setting 1;
Fig. 6 is a flow chart for a condition setting 2;
Fig. 7 is a flow chart for a condition setting 3;
Fig. 8 is a flow chart for a condition setting 4;
Figs. 9A and 9B are respectively a block diagram and an external view of a digital camera;
Fig. 10 is a flow chart for condition setting with the digital camera; and
Figs. 11A, 11B and 11C are views showing example of images printed on a sheet.

### DETAILED DESCRIPTION OF THE PREFERRED EMBODIMENTS

Now the present invention will be explained by embodiments thereof, with reference to the accompanying drawings.

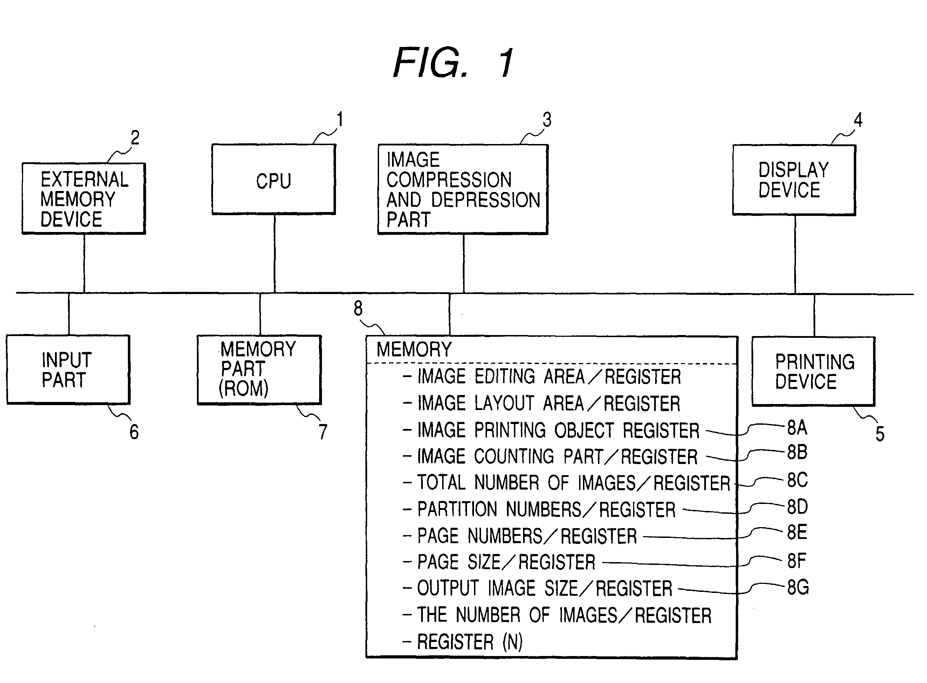

Fig. 1 is a block diagram of a control apparatus for an electronic image. As an external memory device 2, a non-volatile memory medium can be chosen as an example. An external memory device 2 is detachably mountable on a digital camera and also on the present control apparatus, and stores the image data taken for example by the digital camera as an image file. The above-mentioned non-volatile memory medium may also contain a print object designation/condition file for defining the print object image and the print condition such as the printing sheet. Also instead of employing the detachable memory medium, the control apparatus in the present invention may incorporate a memory device for storing a file transferred directly from the digital camera or through a memory medium.

The image designation for arranging images on a sheet is executed from an input part 6. Such image designation includes the setting of various conditions for example of designation of a sheet size such as B4, A4, B5 or A5, that of a print sheet size such as a whole sheet, a half sheet, a quarter sheet or a sixth sheet of the newspaper size, number of image divisions per printing sheet or image size (represented by sheet size or by image dimension), the designation of an appropriate layout mode. When the image signal is selected and designated, the number thereof is from time to time stored in an image printing object register area 8A in a memory 8, and the number of an image counter area 8B in the memory 8 is at the same time increased by one and is newly stored in a total image number register 8C therein. Then, as a condition for arranging and printing plural images on a page, a partition number for designating the number of divisions or the number of images to be arranged on a page is entered manually from the input part 6 and is stored in a partition number register 8D of the memory 8. Similarly the desired number of sheets is stored in a page number register 8E in the memory 8, and the desired print sheet size is stored in a page size register 8F. Also the desired image size is stored in an output image size register 8G.

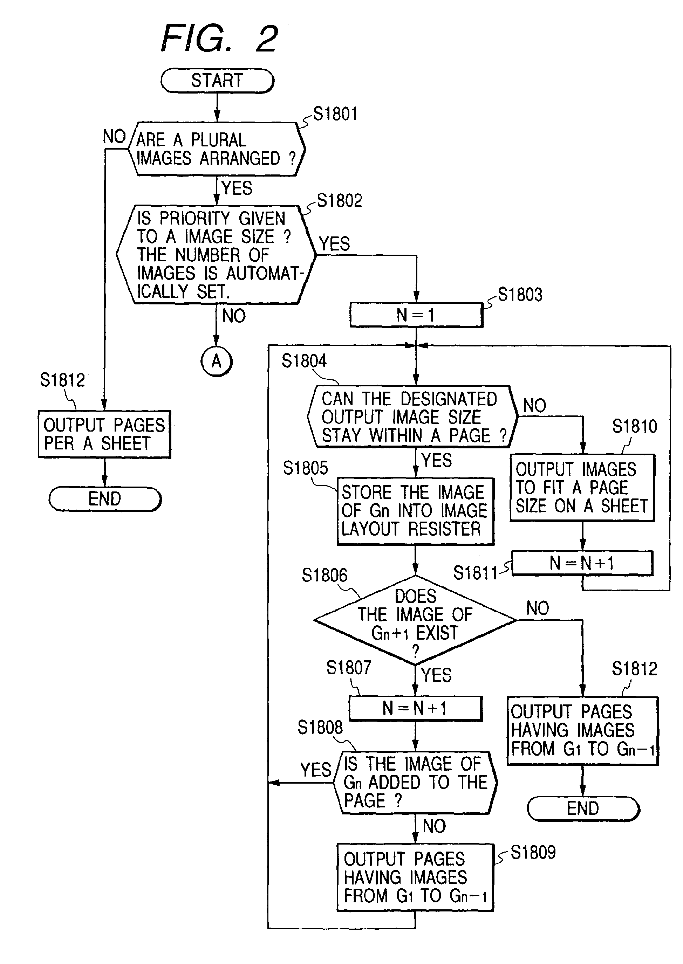

A partition number register 8D in the memory 8 stores a number of additional images and a condition of layout permissible in case of maintaining the printed image size, determined from the sheet and the partition number, and the minimum distance of the images, by referring to a partition table based on the maximum partition layout condition and the partition number at the completion of sheet setting. A decode/distribution process distributes and stores, in case an external memory device 2 (for example a non-volatile memory medium storing image data) contains an image to be printed and a condition designating file corresponding to the image, the results of decoding of such content in the total image number register 8C, the image printing object register 8A, the partition number register 8D, the page number register 8E, the page size register 8F and the output image size register 8G. An image decode/decompression part 3 executes decoding of the compressing condition of data compressed for example by JPEG and decompression of the data. Pixel information 18 obtained by the image decode/decompression part 3 is supplied to a central processing unit (CPU) 1, and the layout condition is determined from the print output size and the output resolution, by referring to the areas in the memory 8, namely the total image number register 8C, the image printing object register 8A, the partition number register 8D, the page number register 8E, the sheet size register 8F and the output image size register 8G. A printing device 5 converts the image data, decompressed according to the result of the CPU 1, into print data matching the printing apparatus and transfers such print data thereto. For calculating the layout condition, the CPU 1 acquires and stores in advance various conditions relating to the print layout such as the printable area, through a print control part. Programs corresponding to the flow charts shown in Figs. 2 to 8 are stored in a read-only memory (ROM) of a memory 7 shown in Fig. 1, and are executed by the CPU. The programs stored in the ROM may be stored in another memory medium or may be loaded from an external memory into an internal memory.

In the embodiment of the present invention, in a printing apparatus provided with means for entering image number information etc. for specifying the image data stored in the non-volatile memory medium, a control part for decoding and decompressing the image data, a control part for printing the image data and decoding means for the non-volatile memory medium storing the print object and condition designating file prepared in advance by image designating means outside the present apparatus for example that of a digital camera, the print object image information obtained by an input of the print object image number or by decoding the print object and condition designating file is stored in a specified memory part of the apparatus, and the images designated by thus stored information are arranged in succession on the printing sheet according to the image layout condition of the designated sheet whereby the printing with automatic page change is continued until all the images are printed.

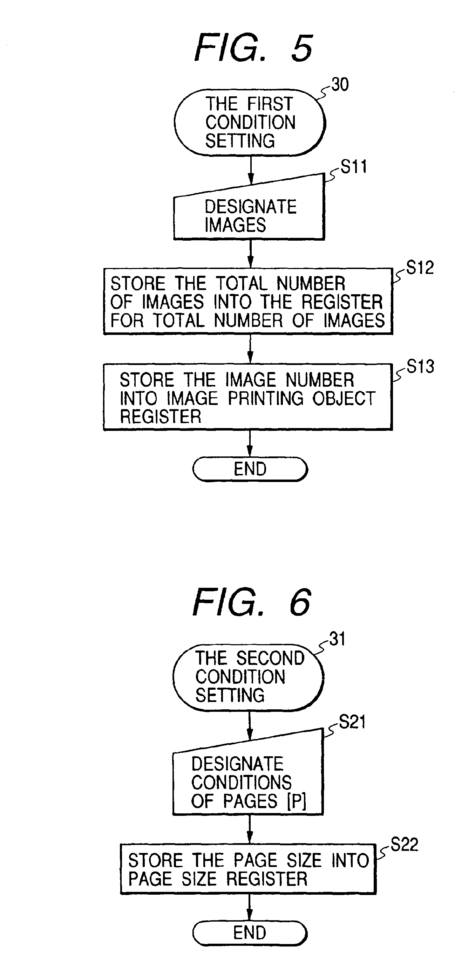

At first reference is made to Fig. 5 for explaining a first condition setting process for designating an image.

At first, in a step S11, an image to be designated is entered manually from the input part 6. Then a step S12 stores the total number of the designated images in the total image number register 8C. Than a step S13 stores the image number of the image designated by the input part 6 in the image printing object register 8C.

Then reference is made to Fig. 6 for explaining a second condition setting process for designating the sheet size.

At first, in a step S21, an input on the sheet to be designated is entered from the input part 6. Then a step S22 stores the sheet size entered from the input part 6 in the sheet size register 8F.

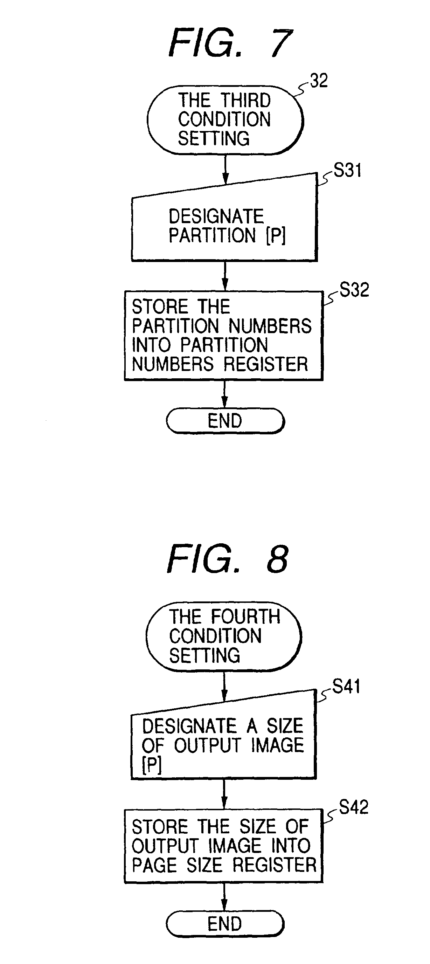

Then reference is made to Fig. 7 for explaining a third condition setting process for designating the partition number.

At first, in a step S31, a partition number is manually entered from the input part 6. Then a step S32 stores the partition number, entered from the input part 6, in the partition number register 8D.

Then reference is made to Fig. 8 for explaining a fourth condition setting process for designating an image size.

At first, in a step S41, an image size is entered from the input part 6. Then a step S42 stores the image size entered from the input part 6 in the image size register 8G.

In the following there will be explained, with reference to Fig. 2, a process in case the printing is instructed by the user after the aforementioned first to fourth condition settings. Each condition setting is achieved either automatically or by entering a numerical condition. The automatically set condition becomes lower in priority in case another condition is entered by the numerical value.

In the following there will be explained a case where the image is to be outputted with a desired size on the sheet or the number of images to be outputted on the sheet is designated while the image size is automatically set.

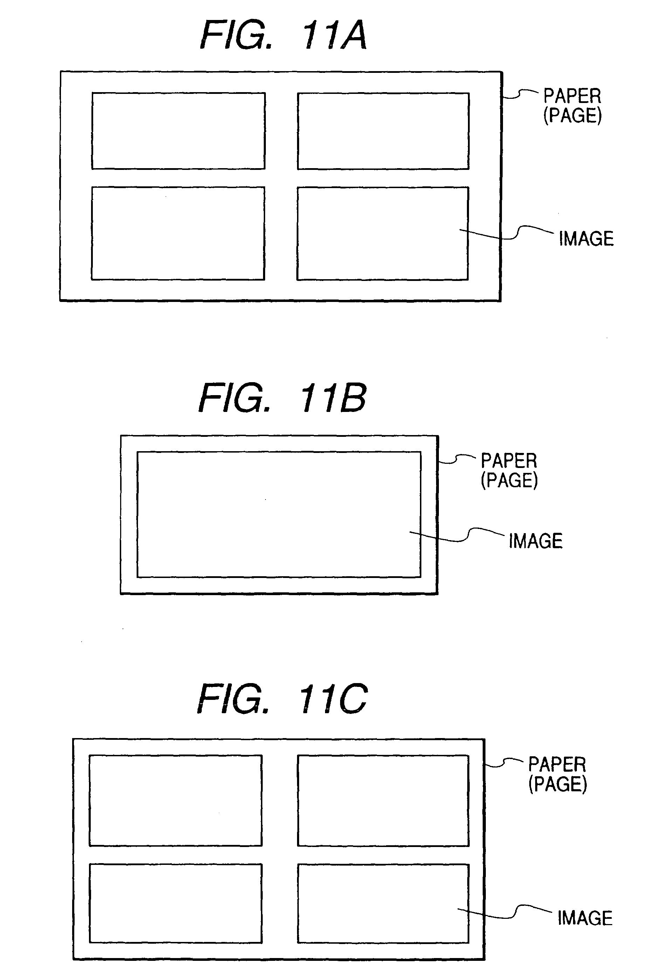

At first, in step S1801, it is checked whether a plural images on the output sheet are arranged or not. If "NO" in step S1801, an image read from the file is output to an image layout register for outputting an image with the designated image size on the sheet in step S1812 as shown in Fig. 11B. On the other hand, if "YES" in step S1801, the sequence proceeds to step S1802 for discriminating whether the priority is given to the image size and the number of images is automatically set. If the priority is given to the image size, the sequence proceeds to step S1803 for setting "1" in a register N. Then step S1804 checks whether the images of a number of the register N can be accommodated in the sheet. If affirmative, step S1805 transfers an image Gn from the file into the image layout register, and next step S1806 checks whether a next image Gn+1 is present. If not, step S1811 sends an image layout storing the images up to the image Gn+1 to the printing apparatus and executes output on the output sheet as shown in Fig. 11A. If affirmative, a process for adding N+1 into N (N = N+1) is executed in step S1807, and it is checked whether the image Gn is added to the image layout on the sheet in step S1808. That is, there is checked, from the sheet size and the image size, whether the plural images can be laid on the sheet. If the result is negative, the images up to Gn+1 stored in the image layout register is output to the printing sheet in step S1809. If the result in the step S1804 is negative, step S1810 executes output to the image layout register by reducing the output size on the sheet, and then to the printing apparatus for printing as shown in Fig. 11C. Then there is executed a process N = N+1 on the register N, and the sequence returns to step S1804.

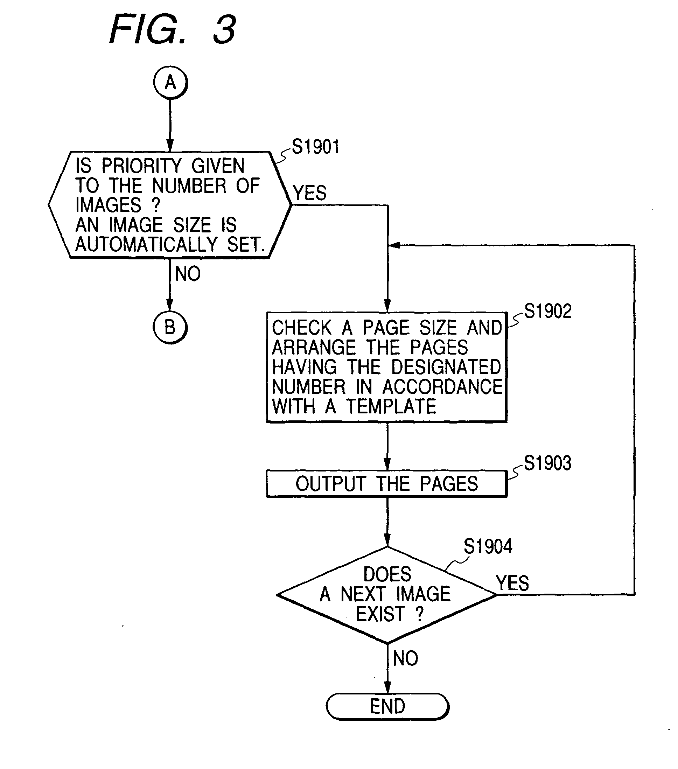

In case step S1802 identifies that the priority is given to the image size and the number of images is not automatically set, the sequence proceeds to the flow chart shown in Fig. 3, wherein step S1901 discriminates whether the priority is given to the number of images and the image size is automatically set.

If affirmative, step S1902 checks the sheet size, then stores the designated number of images in the image layout register of the memory 8 according to a template, and then the images are printed on the output sheet (S1903). Then there is searched, in the memory medium of the external memory device, whether a next image is present (S1904). If present, the sequence returns to step S1902, but, if not, the sequence is terminated.

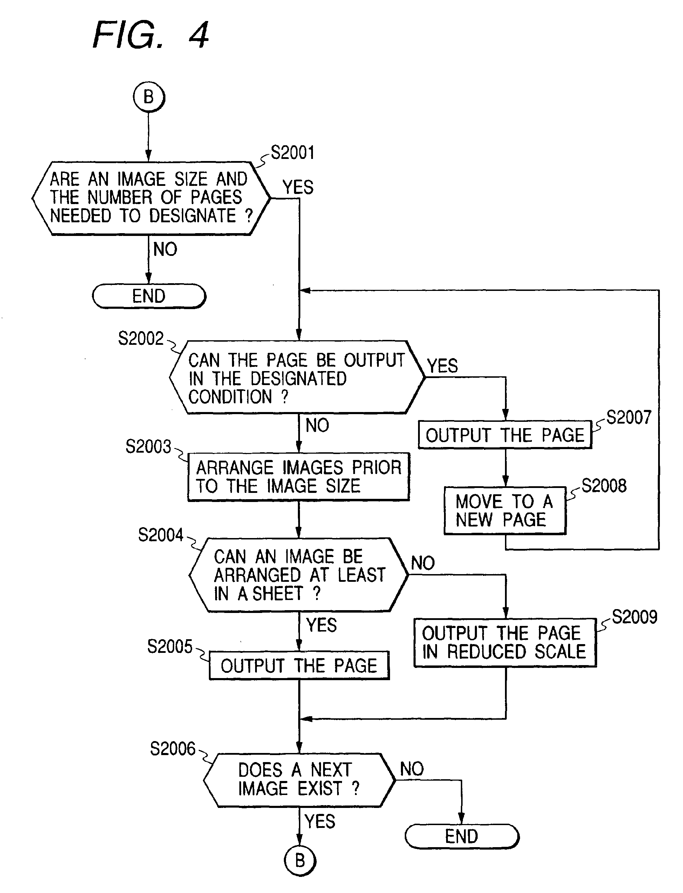

If the result of step S1901 is negative, the sequence proceeds to the flow chart shown in Fig. 4.

In step S2001, it is checked whether the image size and the number of images are both designated. If the both designations are absent, the sequence is terminated, but, if they are present, the sequence proceeds to step S2002 for discriminating whether the designated output is possible on the sheet. If the designated output is possible, there are executed the output of a sheet (step S2007) and a page change process for proceeding to a next sheet (step S1008). On the other hand, if the designated output is not possible, an image is arranged with priority on the image size in step S2003. Then step S2004 discriminates whether at least an image can be placed. If possible, there is executed output (step S2005), but, if not, there is executed output with a reduction in the size (step S2009). Then step S2006 checks whether a next image is present. If absent, the sequence is terminated, but, if present, the sequence returns to step S2001 for repeating the above-described procedure.

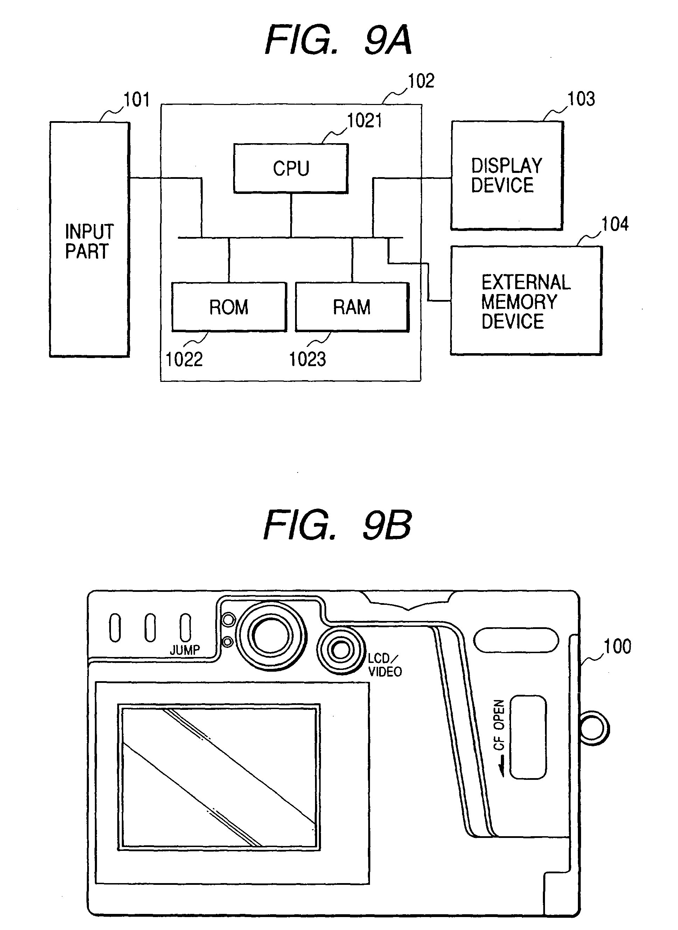

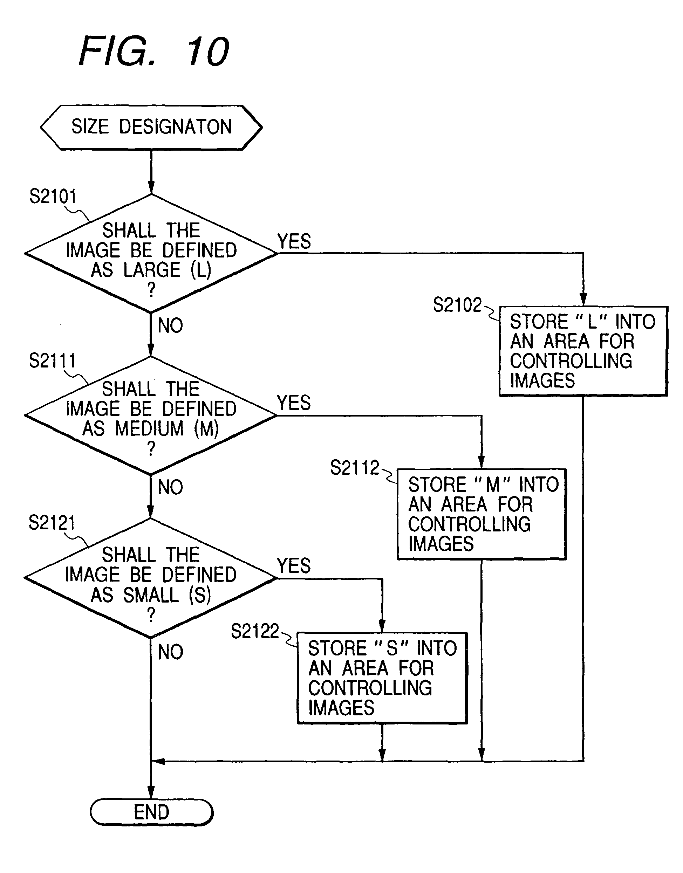

Fig. 9A is a block diagram of a digital camera 100 shown in Fig. 9B, wherein an input part 101 is used for designating the setting of mode etc. A processing part 102 includes a CPU 1021, a ROM 1022, and a RAM 1023. The ROM 1022 stores the procedure shown in Fig. 10. The RAM 1023 stores an image fetched by the input means in correlation with the image size designated by the designation means for designating the image size. The RAM 1023 corresponds to the memory 8 shown in Fig. 1. An image is taken from an input part 101 or an image pickup part, and the image and the attribute information defined therefor are stored through an external memory device 104. Such external memory device 104 corresponds to the external memory device 2 shown in Fig. 1.

At first the taken image is displayed on a display device 103. Then, according to a program of the ROM 7, there are entered, from the input part 101, the size of the image to be outputted and the instruction for example for executing or not the printing. Fig. 10 shows the process flow to be executed by the CPU for defining the image size (large (L), medium (M) or small (S)) for the image. The display device 103 displays the image, and, in such display state, the image size for such image is entered from the input part (steps S2101, S2111, S2121). The image and the image size data are stored in an external memory device 104 (steps S2101, S2112, S2122).

In the foregoing embodiment, the image control apparatus for executing the image control can be a digital camera, a computer or an image printing order receiving processing device (i.e. printer).

Also an image processing software may be utilized within each device.

The present invention allows to obtain the print result desired by the user with the designation of the image size, in contrast to the conventional method in which the image designation and the printing operation have to be repeated in the unit of each page. Consequently it is rendered possible to executing the printing without size designation at the printing operation, and, as the output size can also be designated on the displayed image instead of on the printing, the image can be reproduced with the desired size on the display, so that the image can be rendered visible in the desired size, in a simpler manner than in the conventional technology.

## Claims

1. A print control apparatus for printing a plurality of images, comprising:
print size designation means (6) for designating a print size for each of the plurality of images to be printed;
sheet size designation means (6) for designating a sheet size on which an image to be printed is printed; and
control means (1) for controlling execution of a print by reducing the print size designated by said print size designation means, in the case that no image can be printed on a page for the sheet size designated by said sheet size designation means if the print size designated by said print size designation means is maintained;
**characterised in that** the print control apparatus includes print image number designation means (8D) for designating a number of images to be printed on a page; and
the control means is operative to reduce the number of images that are allowed in one page with the print size designated by said print size designation means in the case that at least one image but fewer images than designated by said print image number designation means can be printed on one page.

2. A print control method for printing a plurality of images, comprising:
a print size designation step (S41) of designating a print size for each of the plurality of images to be printed;
a sheet size designation step (S21) of designating a sheet size on which an image to be printed is printed; and
a control step of controlling execution of a print by reducing the print size designated in said print size designation step, in the case that no image can be printed on a page for the sheet designated in said sheet size designation step if the print size designated in said print size designation step is maintained;
**characterised in that** it includes a print image number designation step (S31) of designating a number of images to be printed on a page; and
the control step reduces the number of images that are allowed in one page with the print size designated in said print size designation step in the case that at least one image but fewer images than designated in said print image number designation step can be printed on one page.

3. A computer-readable medium storing a computer-executable program for a print control method for printing a plurality of images, said program having processor implementable instructions for executing:
a print size designation step (S41) of designating a print size for each of the plurality of images to be printed;
a sheet size designation step (S21) of designating a sheet size on which an image to be printed is printed; and
a control step of controlling execution of a print by reducing the print size designated in said print size designation step, in the case that no image can be printed on a page for the sheet designated in said sheet size designation step if the print size designated in said print size designation step is maintained;
**characterised in that** it includes a print image number designation step (S31) of designating a number of images to be printed on a page; and
the control step reduces the number of images that are allowed in one page with the print size designated in said print size designation step in the case that at least one image but fewer images than designated in said print image number designation step can be printed on one page.

## Patentansprüche

1. Drucksteuervorrichtung zum Drucken einer Vielzahl von Bildern, mit:
einer Druckgrößenbestimmungseinrichtung (6) zum Bestimmen einer Druckgröße für jedes der Vielzahl von zu druckenden Bildern;
einer Blattgrößenbestimmungseinrichtung (6) zum Bestimmen einer Blattgröße, auf der ein zu druckendes Bild gedruckt wird; und
einer Steuereinrichtung (1) zum Steuern einer Ausführung eines Druckes durch Verringern der durch die Druckgrößenbestimmungseinrichtung bestimmten Druckgröße in dem Fall, dass für die durch die Blattgrößenbestimmungseinrichtung bestimmte Blattgröße kein Bild auf eine Seite gedruckt werden kann, wenn die durch die Druckgrößenbestimmungseinrichtung bestimmte Druckgröße beibehalten wird;
**dadurch gekennzeichnet, dass** die Drucksteuervorrichtung eine Druckbildanzahlbestimmungseinrichtung (8D) zum Bestimmen einer Anzahl von Bildern, die auf eine Seite zu drucken sind, umfasst; und
die Steuereinrichtung betriebsfähig ist, die Anzahl von Bildern zu verringern, die mit der durch die Druckgrößenbestimmungseinrichtung bestimmten Druckgröße auf einer Seite erlaubt sind, in dem Fall, dass mindestens ein Bild, aber weniger Bilder als durch die Druckbildanzahlbestimmungseinrichtung bestimmt, auf eine Seite gedruckt werden können.

2. Drucksteuerverfahren zum Drucken einer Vielzahl von Bildern, mit:
einem Druckgrößenbestimmungsschritt (S41) zum Bestimmen einer Druckgröße für jedes der Vielzahl von zu druckenden Bildern;
einem Blattgrößenbestimmungsschritt (S21) zum Bestimmen einer Blattgröße, auf der ein zu druckendes Bild gedruckt wird; und
einem Steuerschritt zum Steuern einer Ausführung eines Druckes durch Verringern der in dem Druckgrößenbestimmungsschritt bestimmten Druckgröße, in dem Fall, dass für das in dem Blattgrößenbestimmungsschritt bestimmte Blatt kein Bild auf eine Seite gedruckt werden kann, wenn die in dem Druckgrößenbestimmungsschritt bestimmte Druckgröße beibehalten wird;
**dadurch gekennzeichnet, dass** es einen Druckbildanzahlbestimmungsschritt (S31) zum Bestimmen einer Anzahl von Bildern, die auf eine Seite zu drucken sind, umfasst; und
der Steuerschritt die Anzahl von Bildern verringert, die mit der in dem Druckgrößenbestimmungsschritt bestimmten Druckgröße auf einer Seite erlaubt sind, in dem Fall, dass mindestens ein Bild, aber weniger Bilder als in dem Druckbildanzahlbestimmungsschritt bestimmt, auf eine Seite gedruckt werden können.

3. Computerlesbares Medium, das ein computerausführbares Programm für ein Drucksteuerverfahren zum Drucken einer Vielzahl von Bildern speichert, wobei das Programm prozessorimplementierbare Befehle beinhaltet, zum Ausführen von:
einem Druckgrößenbestimmungsschritt (S41) zum Bestimmen einer Druckgröße für jedes der Vielzahl von zu druckenden Bildern;
einem Blattgrößenbestimmungsschritt (S21) zum Bestimmen einer Blattgröße, auf der ein zu druckendes Bild gedruckt wird; und
einem Steuerschritt zum Steuern einer Ausführung eines Druckes durch Verringern der in dem Druckgrößenbestimmungsschritt bestimmten Druckgröße, in dem Fall, dass für das in dem Blattgrößenbestimmungsschritt bestimmte Blatt kein Bild auf eine Seite gedruckt werden kann, wenn die in dem Druckgrößenbestimmungsschritt bestimmte Druckgröße beibehalten wird;
**dadurch gekennzeichnet, dass** er einen Druckbildanzahlbestimmungsschritt (S31) zum Bestimmen einer Anzahl von Bildern, die auf eine Seite zu drucken sind, umfasst; und
der Steuerschritt die Anzahl von Bildern verringert, die mit der in dem Druckgrößenbestimmungsschritt bestimmten Druckgröße auf einer Seite erlaubt sind, in dem Fall, dass mindestens ein Bild, aber weniger Bilder, als in dem Druckbildanzahlbestimmungsschritt bestimmt, auf eine Seite gedruckt werden können.

## Revendications

1. Appareil de commande d'impression pour imprimer plusieurs images, comportant :
un moyen (6) de désignation de format d'impression pour désigner un format d'impression pour chacune des multiples images devant être imprimées ;
un moyen (6) de désignation de format de feuille pour désigner un format de feuille sur laquelle est imprimée une image devant être imprimée ; et
un moyen de commande (1) destiné à commander l'exécution d'une impression en réduisant le format d'impression désigné par ledit moyen de désignation de format d'impression, dans le cas où aucune image ne peut être imprimée sur une page pour le format de feuille désigné par ledit moyen de désignation de format de feuille si le format d'impression désigné par ledit moyen de désignation de format d'impression est maintenu ;
**caractérisé en ce que** l'appareil de commande d'impression comprend un moyen (8D) de désignation de nombre d'images à imprimer destiné à désigner un nombre d'images devant être imprimées sur une page ; et
le moyen de commande peut fonctionner de façon à réduire le nombre d'images autorisées dans une page avec le format d'impression désigné par ledit moyen de désignation de format d'impression dans le cas où au moins une image, mais moins d'images que le nombre désigné par ledit moyen de désignation du nombre d'images à imprimer peuvent être imprimées sur une page.

2. Procédé de commande d'impression pour imprimer plusieurs images, comprenant :
une étape (S41) de désignation de format d'impression consistant à désigner un format d'impression pour chacune des multiples images devant être imprimées ;
une étape (S21) de désignation de format de feuille consistant à désigner un format de feuille sur laquelle une image devant être imprimée est imprimée ; et
une étape de commande consistant à commander l'exécution d'une impression en réduisant le format d'impression désigné dans ladite étape de désignation de format d'impression, dans le cas où aucune image ne peut être imprimée sur une page pour la feuille désignée dans ladite étape de désignation de format de feuille si le format d'impression désigné dans ladite étape de désignation de format d'impression est maintenu ;
**caractérisé en ce qu'**il comprend une étape (S31) de désignation du nombre d'images à imprimer consistant à désigner un nombre d'images devant être imprimées sur une page ; et
l'étape de commande réduit le nombre d'images autorisées dans une page au format d'impression désigné dans ladite étape de désignation de format d'impression dans le cas où au moins une image, mais moins d'images que le nombre désigné dans ladite étape de désignation du nombre d'images à imprimer peuvent être imprimées sur une page.

3. Support lisible par ordinateur stockant un programme exécutable par ordinateur pour un procédé de commande d'impression pour l'impression de plusieurs images, ledit programme comprenant des instructions pouvant être mises en oeuvre par un processeur pour exécuter :
une étape (S41) de désignation de format d'impression consistant à désigner un format d'impression pour chacune des multiples images devant être imprimées ;
une étape (S21) de désignation de format de feuille consistant à désigner un format de feuille sur laquelle une image devant être imprimée est imprimée ; et
une étape de commande consistant à commander l'exécution d'une impression en réduisant le format d'impression désigné dans ladite étape de désignation de format d'impression, dans le cas où aucune image ne peut être imprimée sur une page pour la feuille désignée dans ladite étape de désignation de format de feuille si le format d'impression désigné dans ladite étape de désignation de format d'impression est maintenu ;
**caractérisé en ce qu'**il comprend une étape (S31) de désignation du nombre d'images à imprimer consistant à désigner un nombre d'images devant être imprimées sur une page ; et
l'étape de commande réduit le nombre d'images autorisées dans une page au format d'impression désigné dans ladite étape de désignation de format d'impression dans le cas où au moins une image, mais moins d'images que le nombre désigné dans ladite étape de désignation du nombre d'images à imprimer peuvent être imprimées sur une page.
